# EUROPÄISCHE PATENTSCHRIFT

(11) **EP 1 767 802 B1**
(45) Veröffentlichungstag und Bekanntmachung des Hinweises auf die Patenterteilung: **16.11.2011**
(21) Anmeldenummer: 06018429.8
(22) Anmeldetag: 04.09.2006
(51) Int. Cl.: F16D 13/38, F16D 13/58

(54) **Reibungskupplung mit einem Sensor zur Angabe des Reibbelagverschleisses**
Friction clutch with sensor to indicate wear of the friction plates
Embrayage à friction avec indicateur d'usure des disques d'embrayage

(30) Priorität: 23.09.2005 DE 102005045735
(43) Veröffentlichungstag der Anmeldung: 28.03.2007
(73) Patentinhaber: ZF Friedrichshafen AG, 88046 Friedrichshafen (DE)
(72) Erfinder: Deppert, Reinhard, 97469 Gochsheim (DE); Amberger, Alfred, 97711 Maßbach (DE)

(56) Entgegenhaltungen:
- DE-A1- 19 754 523
- DE-A1-102004 003 287
- DE-C1- 19 756 451

## Beschreibung

Die Erfindung bezieht sich auf eine Reibungskupplung innerhalb eines Antriebsstranges, insbesondere für ein Kraftfahrzeug mit einem eine erste Reibfläche aufweisendes Eingangsteil sowie ein fest mit diesem verbundenes Gehäuse, eine innerhalb des Gehäuses fest aber axial begrenzt verlagerbar angebrachte Anpressplatte mit einer zweiten Reibfläche, eine axial zwischen der ersten und zweiten Reibfläche eingebrachte und Reibbeläge aufweisende Kupplungsscheibe zur gemeinsamen Drehung um eine Achse mit den vorgenannten Bauteilen, welche geeignet ist, im eingekuppelten Zustand das Drehmoment als Ausgangsteil über die Reibbeläge aufzunehmen, Kraftbeaufschlagungsmittel zum reibungsbehafteten Einspannen der Kupplungsscheibe zwischen den Reibflächen, Betätigungsmittel zum Aus- und Einkuppeln der Reibungskupplung und einem ortsfest bezüglich der Reibungskupplung angebrachtes Abtastelement zur Bestimmung des Reibbelagverschleißes. Eine gattungsgemäße Reibungskupplung ist aus DE 197 56 451 C1 bekannt.

Die Reibbeläge der Kupplungsscheiben unterliegen infolge der Einkuppelvorgänge einem stetigen Verschleiß, der zu einer Lebensdauerbegrenzung der Reibungskupplung führt. Der Zeitpunkt bis zum Erreichen des maximalen Verschleißzustandes einer Reibungskupplung ist aber sehr ungenau abschätzbar und nur durch eine aufwändige Kontrolle der vorliegenden Reibbelagstärke kontrollierbar. Hierzu gibt es Vorrichtungen aus dem Stand der Technik (DE - OS 26 40 088), die eine Verlagerung der Anpressplatte bezüglich eines ortsfest angebrachten Sensors erfassen und so eine ungefähre Angabe auf den aktuellen Verschleiß ermöglichen. Übliche Kraftfahrzeugmotoren unterliegen einer messbaren Bauteiltoleranz und weisen deutliche Schwingungsverformung im Betrieb auf. Hierbei liegt die Tendenz vor, dass sich mit der steigenden Laufzeit noch die abnutzungsbedingten Schwingungsverformungen zum Beispiel als Taumelschwingungen stärker ausbilden. Nachteilig bei dieser Ausführung ist daher, dass die Erfassung des Verschleißzustandes sowohl im Neuzustand und insbesondere mit zunehmender Laufzeit ungenau wird und die Feststellung des genauen Reibbelagverschleißes erschwert.

Es ist daher Aufgabe der Erfindung eine Reibungskupplung bereit zu stellen, die sich kostengünstig herstellen lässt und bei der die Erfassung des Reibbelagverschleißes eine hohe Störsicherheit aufweist.

Die Aufgabe wird erfindungsgemäß gelöst durch eine Reibungskupplung, die je zumindest ein fest mit dem Gehäuse und der Anpressplatte verbundenes signalabgebendes oder signalerzeugendes Element zur Aufnahme dieser Signale durch das Abtastelement aufweist, wobei bei Drehung der Reibungskupplung der Abstand der Signale einen Rückschluss auf den Verschleißzustand der Reibbeläge zulässt.

Durch das Vorsehen von zumindest je einem signalabgebenden oder signalerzeugenden Element sowohl an der Anpressplatte als auch am Gehäuse wird über dem ortsfest gegenüber der Reibungskupplung angebrachten Abtastelement sowohl mindestens ein Signal von der Anpressplatte als auch mindestens ein Signal von dem Gehäuse aufgenommen. Bei Betrieb des Antriebsstranges überstreichen beide Signalelemente das Abtastelement. Der zeitliche Abstand der zumindest zwei fest angebrachten Signalelemente an der Anpressplatte und dem Gehäuse lässt einen Rückschluss auf die Lage der Anpressplatte relativ zum Gehäuse zu. Durch die vorgestellten Maßnahmen sind etwaige Toleranzen zwischen dem ortsfest angebrachten Abtastelement und der Reibungskupplung unwichtig und vorhandene Taumelschwingungen wirken sich ebenfalls deutlich geringer aus. Die Auswirkung von schwingungsresultierenden Verformungen innerhalb des Antriebsstranges führen nicht zu einer Verfälschung des vom Abtastelement erfassten Wertes.

Die erfindungsgemäße Ausgestaltung sieht dabei vor, dass das zumindest eine an der Anpressplatte angebrachte signalabgebende oder signalerzeugende Element einen zumindest sich in Achsrichtung verändernden Signalverlauf im Abtastelement erzeugt oder dort zur Erfassung bringt. Hierzu kann das signalabgebende oder signalerzeugende Element an der Anpressplatte zum Beispiel im Fall einer Hallsonde als Abtastelement als radial hervorstehenden Zahn, welcher sich in Achsrichtung auf einem radialen Flächenbereich der Anpressplatte erstreckt, ausgebildet sein, wobei der Zahn in Umfangsrichtung mit zunehmender Axialerstreckung seine axiale Ausdehnung oder seine Lage in Umfangsrichtung verändert. In der Regel ist es dabei ausreichend, wenn zum Beispiel eine Kante des Zahnes, welche nicht entlang einer Parallelen zur Drehachse verläuft, als verschleißbestimmendes Signal herangezogen wird. Mittels des Vergleiches des aktuellen Drehwinkels zwischen dem anpressplattenseitigem signalabgebenden oder signalerzeugenden Element und dem am Gehäuse angebrachten signalabgebenden oder signalerzeugenden Element innerhalb der Abtastebene des Abtastelementes kann direkt auf die Lage der Anpressplatte in Axialrichtung und somit auf den aktuellen Verschleißzustand der Reibbeläge geschlossen werden.

Eine weitere konstruktive Ausführung kann vorsehen, dass die Anpressplatte bei Axialverlagerung infolge Reibbelagverschleiß zusätzlich noch eine mehr oder minder ausgeprägte Drehbewegung bezüglich dem Gehäuse oder dem Eingangsteil ausführt. Hier ist es ausreichend, wenn der aktuelle Drehwinkel zwischen anpressplattenseitigen und gehäuseseitigen signalabgebenden oder signalerzeugenden Elementen durch das Abtastelement erfasst wird. In diesem Falle ist es ausreichend, wenn zumindest eines der signalabgebenden oder signalerzeugenden Elemente eine punkt- oder linienförmige Ausdehnung hat. Eine Schrägstellung zumindest eines der signalabgebenden oder signalerzeugenden Elemente an der Anpressplatte oder dem Gehäuse ist nicht notwendig. Die Festlegung auf einen sich verändernden Verdrehwinkel von signalabgebenden oder signalerzeugenden Elementen zwischen dem Gehäuse und der Anpressplatte infolge Reibbelagverschleiß erlaubt das Herausrechnen der Drehzahl des Antriebsstranges und die exakte Erfassung des Verschleißes unabhängig der anliegenden Motordrehzahl. Es ist aus den vorgenannten Ausführungen auch ersichtlich, dass die Befestigung zumindest eines signalabgebenden oder signalerzeugenden Elementes am Eingangsteil eine Alternative zu der Befestigung am Gehäuse darstellt.

Die Anpressplatte und das Gehäuse bilden zwei Bauteile, welche eine feste, unveränderliche Winkellage gegeneinander einnehmen. Ist die Reibungskupplung im Neuzustand eingekuppelt, so liegen damit beide Signalelemente sowohl axial als auch in Umfangsrichtung in einer exakt vordefinierten Lage zueinander durch die feste Lagepositionierung von Anpressplatte und Gehäuse zueinander. Mit zunehmendem Reibbelagverschleiß wird nun die Anpressplatte relativ zu dem Gehäuse axial verlagert. Hierbei nähern sich erste Reibfläche und zweite Reibfläche entsprechend dem Reibbelagverschleiß axial an. Die Anpressplatte verlagert sich axial gegenüber dem fest mit dem Eingangsteil verbundenen Gehäuse. Durch die dem Stand der Technik, z.B. DD 139 153, DE - OS 28 46 484, DE 30 17 563 A1, Entnehmbahre Befestigung der Anpressplatte am Gehäuse mittels so genannter Tangentialblattfedem kann es bei entsprechender Auslegung vorkommen, dass die Anpressplatte bei ihrer Axialverlagerung infolge Reibbelagverschleiß zusätzlich eine geringe Drehung gegenüber dem Gehäuse ausführt. Diese Verdrehung kann durch entsprechende Ausbildung des oder der signalabgebenden oder signalerzeugenden Elemente an der Anpressplatte in ihrer negativen Auswirkung bezüglich der Reibbelagverschleißerfassung ausgeglichen werden. Denkbar ist hier zum Beispiel, bei Verdrehung der Anpressplatte in Richtung auf das signalabgebende oder signalerzeugende Elemente an dem Gehäuse, das signalabgebende oder signalerzeugende Element an der Anpressplatte insoweit schräg zu stellen, um dies auszugleichen.

Eine weitere erfindungsgemäße Ausgestaltung sieht daher vor, dass das oder die signalabgebende oder signalerzeugende Elemente an der Anpressplatte in Richtung der gemeinsamen Drehachse eine axiale Ausdehnung aufweisen, um dem Sensor eine höhere Lagetoleranz beim Einbau im Neuzustand zu geben und eine dauerhafte Verschleißerfassung sowohl im Neuzustand bis zum Erreichen des maximal möglichen Verschleißes zu ermöglichen. Vorteilhaft ist die axiale Ausdehnung des oder der signalabgebenden oder signalerzeugenden Elemente insoweit ausgedehnt um eventuelle ungünstige Toleranzaddierungen der Bauteile zueinander noch mit abzudecken. Eine weitere Ausgestaltung sieht hierbei vor, wenn das oder die signalabgebenden oder signalerzeugenden Elemente am Gehäuse in Richtung der gemeinsamen Drehachse eine axiale Ausdehnung aufweisen. Die vorgenannten Vorteile bezüglich der anpressplattenseitigen Elemente treffen auch hier zu. Weiterhin vorteilhaft ist, wenn das signalabgebende oder signalerzeugende Element an der Anpressplatte eine größere Axialausdehnung aufweist als das oder die signalabgebende oder signalerzeugende Elemente am Gehäuse. Insbesondere kurz vor Erreichen des maximalen Verschleißes ist so eine ausreichende axiale Überdeckung der anpressplattenseitigen mit den gehäuseseitigen signalabgebenden oder signalerzeugenden Elementen sichergestellt.

Eine weitere Ausgestaltung sieht vor, dass das oder die signalabgebende oder signalerzeugende Elemente an der Anpressplatte entlang der axialen Ausdehnung in Umfangsrichtung eine veränderliche Ausdehnung aufweist. Wird das signalabgebende oder signalerzeugende Element in Achsrichtung zunehmend breiter, so wird bei Axialverlagerung der Anpressplatte infolge Reibbelagverschleiß das Signal im Abtastelement bei einem anderen Drehwinkel erfasst. Auch durch eine gestufte Ausbildung, zum Beispiel durch eine zurückspringende Kante, kann eine deutliche Veränderung des detektierten Verdrehwinkels zum Anzeigen eines vorbestimmten Verschleißzustandes genutzt werden. So kann frühzeitig der notwendige baldige Austausch der Kupplungsscheibe angezeigt werden.
Eine alternative Ausgestaltung hierzu kann vorsehen, dass das oder die signalabgebende oder signalerzeugende Elemente an der Anpressplatte entlang der axialen Ausdehnung in Umfangsrichtung eine veränderliche Lage aufweisen. Es kann vorgesehen sein, dass das oder die signalabgebende oder signalerzeugende Elemente an der Anpressplatte entlang der axialen Ausdehnung in Umfangsrichtung schräg verläuft. Es kann also eine Schrägstellung des Elementes bezüglich einer Parallelen zur Drehachse sein oder eine mehrteilige Ausführung, wobei nach einer ersten Axialerstreckung des Elementes dieses in Umfangsrichtung versetzt ist.

Eine weitere Ausführung sieht vor, dass das oder die signalabgebenden oder signalerzeugenden Elemente in Radialrichtung nahezu den gleichen Abstand zur Ebene des Abtastelementes aufweisen. Dies ist insbesondere für die Bereiche der vorgenannten Elemente vorgesehen, welche durch das Abtastelement zur Signalerfassung erfasst werden. Weiterhin kann vorgesehen sein, dass das oder die signalabgebende oder signalerzeugende Elemente in dem vom Abtastelement überstrichenen Axialbereich unabhängig vom Verschleißzustand der Reibbeläge oder der Kupplungseinrückstellung den gleichen radialen Abstand hierzu aufweisen. Somit kann über den gesamten Betriebszeitraum, welcher von dem Abtastelement detektiert wird, eine gleich bleibende Signalstärke aufgenommen werden. Hierbei ist es auch denkbar, dass die Erfassung des Reibbelagverschleißes erst ab einem zweiten Betriebszeitraum vorgenommen wird und in einem ersten Betriebszeitraum, solange die Kupplung noch eine hohe Lebensdauer zu erwarten hat, keine Detektion vorgenommen wird.

Um eine störungsfreie Erfassung des Reibbelagverschleißes zu Ermöglichen ist vorgesehen, dass das oder die signalabgebende oder signalerzeugende Elemente derart ausgeführt sind, dass diese gegenüber dem Abtastelement unabhängig vom Verschleißgrad der Reibbeläge im eingekuppelten Zustand eine nahezu konstante Signalstärke erzeugen oder abgeben. Dies sowohl gehäuse- als auch anpressplattenseitig.

Eine sehr einfache Möglichkeit der Signalerfassung durch das ortsfest angebrachte Abtastelement ergibt sich, wenn die signalabgebenden oder signalerzeugenden Elemente in einem radial äußeren Bereich der Reibungskupplung angeordnet sind. Je größer der radiale Abstand von der gemeinsamen Drehachse desto geringer können sich evtl. Ungenauigkeiten in der Ausbildung der Signalelemente, also den signalabgebenden oder signalerzeugenden Elementen, auf die Erfassungsgüte auswirken.
Hierbei kann vorzugsweise vorgesehen sein, dass die signalabgebenden oder signalerzeugenden Elemente in radialer Richtung ausgebildet sind. Bei Befestigung des Abtastelementes an der Kupplungsglocke oder der Getriebewand ergibt sich die einfachste Möglichkeit zur Signalerfassung, wenn die signalabgebenden oder signalerzeugenden Elemente nach radial außen weisend angebracht sind.

Um die Erfassung durch das Abtastelement besonders störsicher zu machen, kann vorgesehen sein, dass am Gehäuse zumindest zwei signalabgebende oder signalerzeugende Elemente ausgebildet sind. Konstruktiv können diese oder dieses signalabgebende oder signalerzeugende Element als nach außen gebogene Gehäusekante bei der Herstellung mit ausgebildet werden. Damit hier keine scharfkantigen oder vom Kraftfluss her unstetige Kanten entstehen, kann weiterhin vorgesehen sein, dass das oder die signalabgebenden oder signalerzeugenden Elemente gegenüber der Achsrichtung der Drehachse schräg auf ihren radialen Durchmesser angeordnet sind.
Eine weitere Ausgestaltung sieht hier vor, dass die signalabgebenden oder signalerzeugenden Elemente nach Art einer Gewindesteigung auf ihren radialen Durchmesser angeordnet sind. Für die Anwendungsfälle, dass die signalabgebenden oder signalerzeugende Elemente bezüglich der Drehachse parallel verlaufen, ergibt sich eine besonders kostengünstige Fertigung.

Besonders exakt lässt sich der Reibbelagverschleiß berechnen, wenn die Schräge oder Steigung der zumindest zwei signalabgebenden oder signalerzeugenden Elemente identisch ausgebildet ist. Zum selbigen Zweck kann auch vorgesehen sein, dass die signalabgebenden oder signalerzeugende Elemente derart angeordnet sind, dass deren Drehwinkelabstand in Axialrichtung konstant bleibt.
Zur weiteren Kosterreduzierung sieht eine weitere Ausführungsform vor, dass die zumindest zwei signalabgebenden oder signalerzeugenden Elemente eine Signalfolge mit konstanten Winkelabständen unabhängig von der axialen Positionierung von Abtastelement einerseits und signalabgebenden oder signalerzeugenden Elementen andererseits zueinander liefern.

Sind nun in weiterer erfindungsgemäßer Ausgestaltung die signalabgebenden oder signalerzeugenden Elemente auf der Anpressplatte und auch auf dem Gehäuse unter einem gleichen Winkel gegenüber einer Parallelen zur Drehachse angebracht, so ist zum Beispiel bei der Erstmontage die Axialpositionierung von Abtastelement zur Reibungskupplung weniger aufwändig, da Axialtoleranzen der beiden zueinander weniger Auswirkungen haben. Erst mit auftretenden Reibbelagverschleiß und Axialverlagerung der Anpressplatte im eingekuppelten Zustand entsteht durch die Schrägstellung der Sensorelemente eine relative Änderung des Drehwinkels zwischen anpressplattenseitigen und gehäuseseitigen Sensorelementen.

Eine besonders kostengünstige und betriebssichere Ausgestaltung des Antriebsstranges ergibt sich, wenn das Abtastelement die signalabgebenden oder signalerzeugenden Elemente in radialer Richtung abtastet.

Eine weitere erfindungsgemäße Version sieht vor, dass das oder die signalabgebenden oder signalerzeugenden Elemente an der Anpressplatte gegenüber einer Parallelen zur Drehachse schräg auf ihren radialen Durchmesser angeordnet ist oder sind. Insbesondere wenn das oder die Signalelemente auf der Anpressplatte in ihrer Axialerstreckung eine gestufte Ausbildung, zum Beispiel durch eine zurückspringenden Kante, aufweisen, kann hierdurch neben der kontinuierlichen Erfassung und Berechnung des aktuellen Verschleißes durch Erreichen des Abschnittes, in dem die weitere Axialerstreckung des signalabgebenden oder signalerzeugenden Elementes in Umfangsrichtung versetzt ist, angezeigt werden, dass der Reibbelag verschlissen ist.

Für Reibbeläge mit besonders hohem Verschleißvolumen oder auch bei Reibungskupplungen mit mehreren axial aufeinander folgend angeordneten Kupplungsreibscheiben verlagert sich die Anpressplatte über einen größeren Axialbereich. Hierfür kann erfindungsgemäß vorgesehen sein, dass das oder die signalabgebende oder signalerzeugende Elemente an der Anpressplatte eine größere Axialerstreckung aufweisen als das oder die signalabgebende oder signalerzeugende Elemente am Gehäuse.

Um eine besonders genaue Erfassung des Reibbelagverschleißes zu ermöglichen kann vorgesehen sein, dass das oder die signalabgebende oder signalerzeugende Element an dem Gehäuse in Axialrichtung unter einem Winkel alpha gegenüber einer Parallelen zur Drehachse und das oder die signalabgebende oder signalerzeugende Element an der Anpressplatte in Axialrichtung unter einem Winkel beta gegenüber einer Parallelen zur Drehachse angeordnet ist / sind, wobei die beiden Winkel verschieden sind.
Hierbei sieht eine weitere Variation vor, dass der eine der Winkel beta und alpha entgegen der Drehrichtung und der andere Winkel in Drehrichtung geneigt ist. Dies ergibt eine besonders große Veränderung der Abstandes in Umfangsrichtung der zumindest zwei Sensorelemente.

In besonderer Ausgestaltung kann hier vorgesehen sein, dass der Winkel, um den die signalabgebenden oder signalerzeugenden Elemente auf ihrer radialen Hülle schräg angebracht, also geneigt gegenüber dieser Parallele zur Drehachse sind, einen Winkel kleiner als 60°, vorzugsweise kleiner als 45° einnimmt.

Durch das Vorsehen von zumindest drei signalabgebenden oder signalerzeugenden Elementen auf der Anpressplatte und dem Gehäuse kann in kurzer Signalreihenfolge die Verschleißermittlung erfolgen, ohne dass die Drehzahl zur Berechnung notwendig wird. Hierbei ist es besonders vorteilhaft, wenn die zumindest drei Sensorelemente innerhalb eines kurzen Verdrehwinkels angeordnet sind. Vorgeschlagen wird, diese innerhalb eines Verdrehwinkels von 30 Grad, vorteilhafterweise innerhalb von 15 Grad angeordnet. Es ist zwar prinzipiell möglich auch mit jeweils nur einem signalabgebenden oder signalerzeugenden Element bei vollständiger Drehung die Drehzahlerfassung überflüssig zu machen. Jedoch ist dann für drei Signale eine längere Laufzeit notwendig, innerhalb derer die Drehzahl nahezu konstant bleiben muss. Eine solche kurze Signalreihenfolge ist insbesondere dann von Vorteil, wenn die Reibungskupplung in einem Antriebsstrang mit schnellen Drehzahlschwankungen eingebaut wird.
Weiterhin ist vorgesehen, dass auf der Anpressplatte mindestens ein gegenüber einer Parallelen zur Drehachse schräg gestelltes signalabgebendes oder signalerzeugendes Element und auf dem Gehäuse mindestens zwei signalabgebende oder signalerzeugende Elemente angeordnet sind. Diese erlaubt eine einfache Ausbildung der Erfindung, wobei dadurch, dass innerhalb weniger als einer Umdrehung zumindest drei zueinander positionierte Signale erfasst werden, ein direkter Rückschluss auf die Lage der Anpressplatte erfolgen kann.
Bei ausreichender Dimensionierung des Abtastelementes und der signalabgebenden oder signalerzeugenden Elemente ist es möglich über die Bestimmung des Reibbelagverschleißes im eingekuppelten Zustand hinaus auch noch die momentane Axialposition der Anpressplatte während eines Kupplungsvorganges zu erfassen. Dies kann für automatisierte Kupplungsvorgänge vorteilhaft angewendet werden.

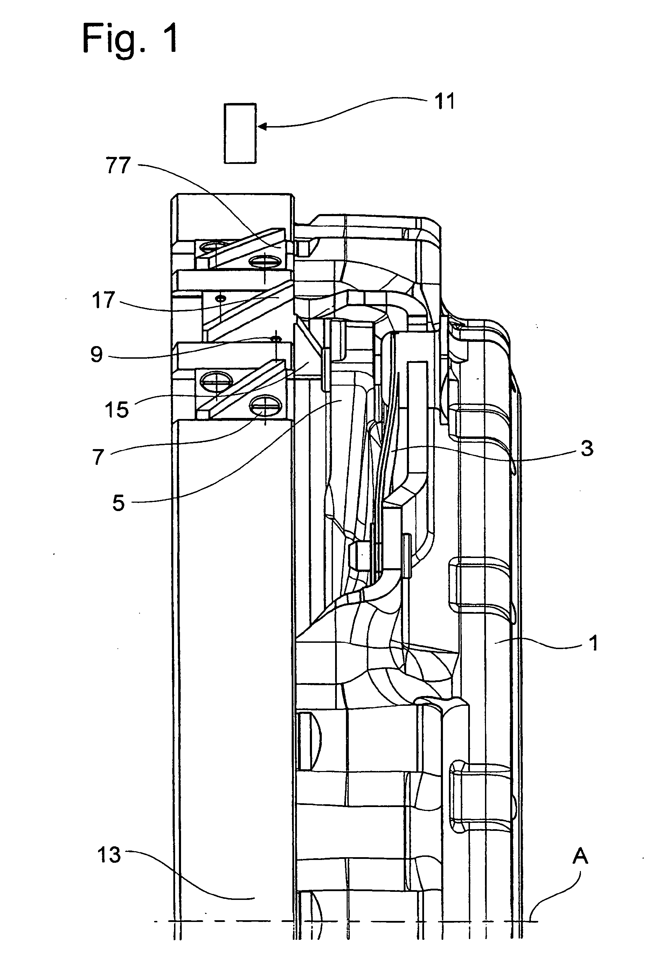

Die Figur 1 zeigt eine erfindungsgemäße Ausgestaltung einer Reibungskupplung, bei der die signalabgebenden oder signalerzeugenden Elemente 7 und 9, also der Signalelemente, auf nach radial außen weisenden Gehäuse- und Anpressplattenabschnitten in Form von schräg gestellten Zahnelemente erfolgt. Das Gehäuse 1 ist bei dieser Ausführungsform besonders stark umgreifend und weist im Bereich der Tangentialblattfeder 3 mehrere von der Kreisform abweichende Bauteilausformungen auf, welche in diesem Fall eine genaue Erfassung der Signale durch das als Hallsensor ausgeführte Abtastelement 11 erschweren. Obwohl es grundsätzlich möglich ist, die Gehäuseausschnitte für die Tangentialblattfedem als gehäuseseitige Signalelemente 7 zu verwenden, wurde hier darauf verzichtet. Die gehäuseseitigen Signalelemente 7 sind hier vielmehr an dem als Eingangsteil 13 wirkenden Schwungrad radial außen angeschraubt. Da das Gehäuse 1 und das Eingangsteil eine feste Einheit bilden, ist die Wirkung identisch. Das anpressplattenseitige Sensorelement 9 ist über einen halsartigen Fortsatz 15 mit der axial beweglichen Anpressplatte 5 verbunden und führt mit dieser entsprechend die Axialbewegungen aus. Hierbei verlagert sich die Anpressplatte 5 infolge Reibbelagverschleiß axial in Richtung auf die Sensorelemente 7 und 9 zu. Der Sensorelement 9 hat einen im Hallsensor ein Signal erzeugenden Zahn 17, der bezüglich der gemeinsamen Drehachse A schräg gestellt ist. Es ist ersichtlich, dass nun die gehäuseseitigen Sensoren 7 ihre axiale Lage unabhängig des Reibbelagverschleißes beibehalten und das anpressplattenseitige Sensorelement 9 entsprechend dem Belagverschleiß im eingekuppelten Zustand sich identisch mit der Anpressplatte 5 verlagert. Hierbei wird nun in der Abtastebene des Abtastelementes 11 in Umfangsrichtung der Abstand zwischen dem Zahn 17 des anpressplattenseitigen Sensorelementes 9 und dem Zahn des gehäuseseitigen Sensorelementes 7 verändert, woraus sich die Axialverlagerung der Anpressplatte 5 bestimmen lässt. Das nachfolgend zum anpressplattenseitigen Sensorelement 9 folgende weitere gehäuseseitige Sensorelement 77 erfährt bei Reibbelagverschleiß eine Vergrößerung des umfangsseitigen Abstandes und dessen hervorstehender Zahn erzeugt ebenfalls wie das Sensorelement 7 ein reibelagverschleißunabhängiges Signal im Abtastelement 11. Der umfangsseitige Abstand der beiden gehäuseseitigen Sensorelemente 7 und 77 bleibt konstant.

Aus der Anordnung der Sensorelemente 7, 9 und 77 ist ersichtlich, dass die Reibbeläge der Kupplungsscheibe axial zwischen der Anpressplatte 5 und dem fest mit dem Gehäuse 1 verbundenen Eingangsteil 13 eingebracht sind und dass die erfindungsgemäße Verschleißdetektierungsanordnung jegliche Veränderung der Lage der Anpressplatte 5 erfasst. Damit wird im eingekuppelten Zustand nicht nur der Reibbelagverschleiß erfasst sondern auch eventuelle Setzverluste einer axial zwischen den beiden Reibbelagflächen eingebrachten Belagfeder. Weiterhin kann bei Reibungskupplungen beinhaltend neben einer Anpressplatte und einer Kupplungsscheibe noch zumindest eine weitere Kupplungsscheibe und zumindest eine zwischen der weiteren Kupplungsscheibe und der ersten Kupplungsscheibe eingebrachten, Reibmoment übertragende Zwischenscheibe mit der erfindungsgemäßen Verschleißdetektierungsanordnung auch der gesamte Reibbelagverschleiß erfasst werden.

## Patentansprüche

1. Reibungskupplung innerhalb eines Antriebsstranges, insbesondere für ein Kraftfahrzeug, umfassend:
ein eine erste Reibfläche aufweisendes Eingangsteil (13) sowie ein fest mit diesem verbundenes Gehäuse (1).
eine innerhalb des Gehäuses fest aber axial begrenzt verlagerbar angebrachte Anpressplatte (5) mit einer zweiten Reibfläche,
eine axial zwischen der ersten und zweiten Reibfläche eingebrachte und
Reibbeläge aufweisende Kupplungsscheibe zur gemeinsamen Drehung um eine Achse mit den vorgenannten Bauteilen, welche geeignet ist, im eingekuppelten Zustand das Drehmoment als Ausgangsteil über die Reibbeläge aufzunehmen,
Kraftbeaufschlagungsmittel zum reibungsbehafteten Einspannen der Kupplungsscheibe zwischen den Reibflächen,
Betätigungsmittel zum Aus- und Einkuppeln der Reibungskupplung,
ein ortsfest bezüglich der Reibungskupplung angebrachtes Abtastelement (11) zur Bestimmung des Reibbelagverschleißes
**dadurch gekennzeichnet, dass**
die Reibungskupplung je zumindest ein fest mit dem Gehäuse und der Anpressplatte verbundenes signalabgebendes oder signalerzeugendes Element (7, 9) zur Aufnahme dieser Signale durch das Abtastelement (11) aufweist, wobei die mindestens zwei Elemente (7, 9) derart angeordnet sind, dass bei Drehung der Reibungskupplung der zeitliche Abstand der Signale einen Rückschluss auf den Verschleißzustand der Reibbeläge zulässt.

2. Reibungskupplung nach Anspruch 1 **dadurch gekennzeichnet, dass** das oder die signalabgebende oder signalerzeugende Elemente an der Anpressplatte in Richtung der gemeinsamen Drehachse eine axiale Ausdehnung aufweisen.

3. Reibungskupplung nach Anspruch 1 **dadurch gekennzeichnet, dass** das oder die signalgebende oder signalerzeugende Elemente an dem Gehäuse in Richtung der gemeinsamen Drehachse eine axiale Ausdehnung aufweisen.

4. Reibungskupplung nach Anspruch 2 **dadurch gekennzeichnet, dass** das oder die signalabgebende oder signalerzeugende Elemente an der Anpressplatte entlang der axialen Ausdehnung in Umfangsrichtung eine veränderliche Ausdehnung aufweist.

5. Reibungskupplung nach Anspruch 2 **dadurch gekennzeichnet, dass** das oder die signalabgebende oder signalerzeugende Elemente an der Anpressplatte entlang der axialen Ausdehnung in Umfangsrichtung eine veränderliche Lage aufweist.

6. Reibungskupplung nach Anspruch 4 oder 5 **dadurch gekennzeichnet, dass** das oder die signalabgebende oder signalerzeugende Elemente an der Anpressplatte entlang der axialen Ausdehnung in Umfangsrichtung schräg verläuft.

7. Reibungskupplung nach Anspruch 2 und / oder Anspruch 3 **dadurch gekennzeichnet, dass** das oder die signalabgebende oder signalerzeugende Elemente in Radialrichtung nahezu den gleichen Abstand zur Ebene des Abtastelementes aufweisen.

8. Reibungskupplung nach Anspruch 2 und / oder Anspruch 3 **dadurch gekennzeichnet, dass** das oder die signalabgebende oder signalerzeugende Elemente in dem vom Abtastelement überstrichenen Axialbereich unabhängig vom Verschleißzustand der Reibbeläge oder der Kupplungseinrückstellung den gleichen radialen Abstand hierzu aufweisen.

9. Reibungskupplung nach Anspruch 1 oder einem der vorhergehenden Ansprüche **dadurch gekennzeichnet, dass** das oder die signalabgebende oder signalerzeugende Elemente derart ausgeführt sind, dass diese gegenüber dem Abtastelement unabhängig vom Verschleißgrad der Reibbeläge im eingekuppelten Zustand eine nahezu konstante Signalstärke erzeugen oder abgeben.

10. Reibungskupplung nach Anspruch 1 oder einem der vorhergehenden Ansprüche **dadurch gekennzeichnet, dass** die signalabgebenden oder signalerzeugenden Elemente in einem radial äußeren Bereich der Reibungskupplung angeordnet sind.

11. Reibungskupplung nach Anspruch 1 oder einem der vorhergehenden Ansprüche **dadurch gekennzeichnet, dass** die signalabgebenden oder signalerzeugenden Elemente in radialer Richtung ausgebildet sind.

12. Reibungskupplung nach Anspruch 1 oder einem der vorhergehenden Ansprüche **dadurch gekennzeichnet, dass** am Gehäuse zumindest zwei signalabgebende oder signalerzeugende Elemente ausgebildet sind.

13. Reibungskupplung nach zumindest einem der Ansprüche 1 bis 3 oder Anspruch 12 **dadurch gekennzeichnet, dass** die signalabgebenden oder signalerzeugenden Elemente gegenüber einer Parallelen zur Achsrichtung der Drehachse schräg auf ihren radialen Durchmesser angeordnet sind.

14. Reibungskupplung nach Anspruch 12 **dadurch gekennzeichnet, dass** die signalabgebenden oder signalerzeugenden Elemente nach Art einer Gewindesteigung auf ihren radialen Durchmesser angeordnet sind.

15. Reibungskupplung nach Anspruch 13 oder 14 **dadurch gekennzeichnet, dass** die Schräge oder Steigung der signalabgebenden oder signalerzeugenden Elemente identisch ausgebildet ist.

16. Reibungskupplung nach Anspruch 12 **dadurch gekennzeichnet, dass** die signalabgebende oder signalerzeugende Elemente derart angeordnet sind, dass deren Drehwinkelabstand in Axialrichtung konstant bleibt.

17. Reibungskupplung nach Anspruch 12 oder 16 **dadurch gekennzeichnet, dass** die zumindest zwei signalabgebenden oder signalerzeugenden Elemente eine Signalfolge mit konstanten Winkelabständen unabhängig von der axialen Positionierung von Abtastelement und signalabgebenden oder signalerzeugenden Elementen zueinander liefern.

18. Reibungskupplung nach einem der vorhergehenden Ansprüche **dadurch gekennzeichnet, dass** die signalabgebenden oder signalerzeugenden Elemente auf der Anpressplatte und auf dem Gehäuse unter einem gleichen Winkel gegenüber einer Parallelen zur Drehachse angebracht sind.

19. Reibungskupplung nach Anspruch 1 **dadurch gekennzeichnet, dass** das Abtastelement die signalabgebenden oder signalerzeugenden Elemente in radialer Richtung abtastet.

20. Reibungskupplung nach Anspruch 1 oder 2 **dadurch gekennzeichnet, dass** das oder die signalabgebende oder signalerzeugende Elemente an der Anpressplatte gegenüber der Achsrichtung der Drehachse schräg auf ihren radialen Durchmesser angeordnet ist oder sind.

21. Reibungskupplung nach einem der Ansprüche 1 bis 3 **dadurch gekennzeichnet, dass** das oder die signalabgebende oder signalerzeugende Elemente an der Anpressplatte eine größere Axialerstreckung aufweisen als das oder die signalabgebende oder signalerzeugende Elemente am Gehäuse.

22. Reibungskupplung nach zumindest einem der vorhergehenden Ansprüche **dadurch gekennzeichnet, dass** die signalabgebende oder signalerzeugende Elemente an der Anpressplatte und dem Gehäuse in Axialrichtung unter dem gleichen Winkel angeordnet sind.

23. Reibungskupplung nach zumindest einem der vorhergehenden Ansprüche **dadurch gekennzeichnet, dass** das oder die signalabgebende oder signalerzeugende Elemente an dem Gehäuse in Axialrichtung unter einem Winkel alpha gegenüber einer Parallelen zur Drehachse und das oder die signalabgebende oder signalerzeugende Elemente an der Anpressplatte in Axialrichtung gegenüber einem Winkel beta gegenüber einer Parallelen zur Drehachse angeordnet ist / sind, wobei die beiden Winkel verschieden sind.

24. Reibungskupplung nach Anspruch 23 **dadurch gekennzeichnet, dass** der eine Winkel in Drehrichtung geneigt ist und der andere der beiden Winkel alpha und beta entgegen der Drehrichtung geneigt ist.

25. Reibungskupplung nach zumindest einem der vorhergehenden Ansprüche **dadurch gekennzeichnet, dass** der Winkel, um den die signalabgebende oder signalerzeugende Elemente geneigt sind gegenüber dieser Parallele zur Drehachse einen Winkel kleiner als 60°, vorzugsweise kleiner als 45° einnimmt.

26. Reibungskupplung nach zumindest einem der vorhergehenden Ansprüche **dadurch gekennzeichnet, dass** zumindest 3 signalabgebende oder signalerzeugende Elemente auf Anpressplatte und Gehäuse angebracht sind

27. Reibungskupplung nach zumindest einem der vorhergehenden Ansprüche **dadurch gekennzeichnet, dass** auf der Anpressplatte mindestens ein gegenüber einer Parallelen zur Drehachse schräg gestelltes signalabgebendes oder signalerzeugendes Element und auf dem Gehäuse mindestens zwei signalabgebende oder signalerzeugende Elemente angeordnet sind.

## Claims

1. Friction clutch within a drivetrain, in particular for a motor vehicle, comprising:
an input part (13) which has a first friction surface, and a housing (1) fixedly connected to said input part (13),
a pressure plate (5) which is mounted fixedly, but so as to be axially movable to a limited extent,
within the housing and which has a second friction surface,
a clutch disc, which is mounted axially between the first and second friction surfaces and which has friction linings, for common rotation with said components about an axis, which clutch disc,
in the clutch-engaged state, is suitable, as an output part, for accommodating the torque via the friction linings,
force exertion means for frictionally clamping the clutch disc between the friction surfaces,
actuating means for disengaging and engaging the friction clutch,
a sensing element (11), which is mounted so as to be positionally fixed with respect to the friction clutch, for determining the friction lining wear,
**characterized in that**
the friction clutch has in each case at least one signal-emitting or signal-generating element (7, 9) fixedly connected to the housing and to the pressure plate in order for said signals to be received by the sensing element (11), wherein the at least two elements (7, 9) are arranged such that, as the friction clutch rotates, the time interval of the signals allows conclusions to be drawn regarding the wear state of the friction linings.

2. Friction clutch according to Claim 1, **characterized in that** the one or more signal-emitting or signal-generating elements on the pressure plate has or have an axial extent in the direction of the common axis of rotation.

3. Friction clutch according to Claim 1, **characterized in that** the one or more signal-emitting or signal-generating elements on the housing has or have an axial extent in the direction of the common axis of rotation.

4. Friction clutch according to Claim 2, **characterized in that** the one or more signal-emitting or signal-generating elements on the pressure plate has or have an extent along the axial extent which varies in the circumferential direction.

5. Friction clutch according to Claim 2, **characterized in that** the one or more signal-emitting or signal-generating elements on the pressure plate has or have a position along the axial extent which varies in the circumferential direction.

6. Friction clutch according to Claim 4 or 5, **characterized in that** the one or more signal-emitting or signal-generating elements on the pressure plate runs or run obliquely along the axial extent in the circumferential direction.

7. Friction clutch according to Claim 2 and/or Claim 3, **characterized in that** the one or more signal-emitting or signal-generating elements is or are at approximately the same distance in the radial direction from the plane of the sensing element.

8. Friction clutch according to Claim 2 and/or Claim 3, **characterized in that** the one or more signal-emitting or signal-generating elements, in the axial region passed over by the sensing element, is or are at the same radial distance from said sensing element regardless of the wear state of the friction linings or the clutch engagement position.

9. Friction clutch according to Claim 1 or one of the preceding claims, **characterized in that** the one or more signal-emitting or signal-generating elements is or are designed so as to generate or emit a virtually constant signal strength with respect to the sensing element regardless of the degree of wear of the friction linings in the clutch-engaged state.

10. Friction clutch according to Claim 1 or one of the preceding claims, **characterized in that** the signal-emitting or signal-generating elements are arranged in a radially outer region of the friction clutch.

11. Friction clutch according to Claim 1 or one of the preceding claims, **characterized in that** the signal-emitting or signal-generating elements are formed in the radial direction.

12. Friction clutch according to Claim 1 or one of the preceding claims, **characterized in that** at least two signal-emitting or signal-generating elements are formed on the housing.

13. Friction clutch according to at least one of Claims 1 to 3 or Claim 12, **characterized in that** the signal-emitting or signal-generating elements are arranged on the radial diameter thereof, obliquely with respect to a parallel to the axial direction of the axis of rotation.

14. Friction clutch according to Claim 12, **characterized in that** the signal-emitting or signal-generating elements are arranged on the radial diameter thereof in the manner of a thread pitch.

15. Friction clutch according to Claim 13 or 14, **characterized in that** the inclination or pitch of the signal-emitting or signal-generating elements is identical.

16. Friction clutch according to Claim 12, **characterized in that** the signal-emitting or signal-generating elements are arranged such that their rotational angle spacing remains constant in the axial direction.

17. Friction clutch according to Claim 12 or 16, **characterized in that** the at least two signal-emitting or signal-generating elements output a signal sequence with constant angular intervals regardless of the axial positioning of the sensing element and signal-emitting or signal-generating elements with respect to one another.

18. Friction clutch according to one of the preceding claims, **characterized in that** the signal-emitting or signal-generating elements are mounted on the pressure plate and on the housing at an identical angle with respect to a parallel to the axis of rotation.

19. Friction clutch according to Claim 1, **characterized in that** the sensing element senses the signal-emitting or signal-generating elements in the radial direction.

20. Friction clutch according to Claim 1 or 2, **characterized in that** the one or more signal-emitting or signal-generating elements is or are arranged on the pressure plate, on the radial diameter thereof, obliquely with respect to the axial direction of the axis of rotation.

21. Friction clutch according to one of Claims 1 to 3, **characterized in that** the one or more signal-emitting or signal-generating elements on the pressure plate has or have a greater axial extent than the one or more signal-emitting or signal-generating elements on the housing.

22. Friction clutch according to at least one of the preceding claims, **characterized in that** the signal-emitting or signal-generating elements on the pressure plate and on the housing are arranged at the same angle in the axial direction.

23. Friction clutch according to at least one of the preceding claims, **characterized in that** the one or more signal-emitting or signal-generating elements on the housing is or are arranged, in the axial direction, at an angle alpha with respect to a parallel to the axis of rotation, and the one or more signal-emitting or signal-generating elements on the pressure plate is or are arranged, in the axial direction, at an angle beta with respect to a parallel to the axis of rotation, wherein the two angles differ.

24. Friction clutch according to Claim 23, **characterized in that** one angle is inclined in the direction of rotation and the other of the two angles alpha and beta is inclined counter to the direction of rotation.

25. Friction clutch according to at least one of the preceding claims, **characterized in that** the angle by which the signal-emitting or signal-generating elements are inclined assumes an angle value of less than 60°, preferably of less than 45°, with respect to said parallel to the axis of rotation.

26. Friction clutch according to at least one of the preceding claims, **characterized in that** at least 3 signal-emitting or signal-generating elements are mounted on the pressure plate and housing.

27. Friction clutch according to at least one of the preceding claims, **characterized in that** at least one signal-emitting or signal-generating element which is set obliquely with respect to a parallel to the axis of rotation is arranged on the pressure plate, and at least two signal-emitting or signal-generating elements are arranged on the housing.

## Revendications

1. Embrayage à friction à l'intérieur d'un groupe propulseur, notamment pour un véhicule automobile, comprenant :
une pièce d'entrée (13) présentant une première surface de friction ainsi qu'un logement (1) solidement relié à celle-ci,
une plaque de pressage (5), comportant une deuxième surface de friction, montée solidement mais de manière décalable axialement limitée à l'intérieur du logement,
un disque d'embrayage monté axialement entre la première et la deuxième surface de friction et présentant des garnitures de friction à des fins de rotation commune autour d'un axe avec les composants précités, qui est approprié pour recevoir dans l'état embrayé le couple de rotation comme pièce de sortie via les garnitures de friction,
un moyen de sollicitation par une force pour encastrer par friction le disque d'embrayage entre les surfaces de friction,
un moyen d'actionnement pour débrayer et embrayer l'embrayage à friction,
un élément de palpeur (11) monté de manière stationnaire par rapport à l'embrayage à friction pour déterminer l'usure de la garniture de friction,
**caractérisé en ce que**
l'embrayage à friction présente respectivement au moins un élément (7, 9) solidement relié au logement et à la plaque de pressage émettant ou générant des signaux pour recevoir ces signaux par l'intermédiaire de l'élément de palpeur (11), dans lequel les au moins deux éléments (7, 9) sont disposés de telle sorte que lors de la rotation de l'embrayage à friction, l'intervalle temporel des signaux autorise un retour d'information sur l'état d'usure des garnitures de friction.

2. Embrayage à friction selon la revendication 1, **caractérisé en ce que** le ou les éléments émettant ou générant des signaux présentent sur la plaque de pressage dans la direction de l'axe de rotation commun un allongement axial.

3. Embrayage à friction selon la revendication 1, **caractérisé en ce que** le ou les éléments émettant ou générant des signaux présentent sur le logement dans la direction de l'axe de rotation commun un allongement axial.

4. Embrayage à friction selon la revendication 2, **caractérisé en ce que** le ou les éléments émettant ou générant des signaux présentent sur la plaque de pressage le long de l'allongement axial dans la direction circonférentielle un allongement variable.

5. Embrayage à friction selon la revendication 2, **caractérisé en ce que** le ou les éléments émettant ou générant des signaux présentent sur la plaque de pressage le long de l'allongement axial dans la direction circonférentielle une position variable.

6. Embrayage à friction selon la revendication 4 ou 5, **caractérisé en ce que** le ou les éléments émettant ou générant des signaux s'étendent en oblique sur la plaque de pressage le long de l'allongement axial dans la direction circonférentielle.

7. Embrayage à friction selon la revendication 2 et/ou la revendication 3, **caractérisé en ce que** le ou les éléments émettant ou générant des signaux présentent dans la direction radiale approximativement le même espacement par rapport au plan de l'élément de palpeur.

8. Embrayage à friction selon la revendication 2 et/ou la revendication 3, **caractérisé en ce que** le ou les éléments émettant ou générant des signaux présentent dans la zone axiale balayée par l'élément de palpeur indépendamment de l'état d'usure des garnitures de friction ou de la position d'indentation de l'embrayage le même espacement radial par rapport à celle-ci.

9. Embrayage à friction selon la revendication 1 ou une des revendications précédentes, **caractérisé en ce que** le ou les éléments émettant ou générant des signaux sont réalisés de telle sorte que ceux-ci émettent ou génèrent une intensité de signal approximativement constante par rapport à l'élément de palpeur indépendamment du degré d'usure des garnitures de friction dans l'état embrayé.

10. Embrayage à friction selon la revendication 1 ou une des revendications précédentes, **caractérisé en ce que** les éléments émettant ou générant des signaux sont disposés dans une zone extérieure radialement de l'embrayage à friction.

11. Embrayage à friction selon la revendication 1 ou une des revendications précédentes, **caractérisé en ce que** les éléments émettant ou générant des signaux sont réalisés dans la direction radiale.

12. Embrayage à friction selon la revendication 1 ou une des revendications précédentes, **caractérisé en ce que** sur le logement au moins deux éléments émettant ou générant des signaux sont réalisés.

13. Embrayage à friction selon au moins une des revendications 1 à 3 ou la revendication 12, **caractérisé en ce que** les éléments émettant ou générant des signaux sont disposés en oblique sur leur diamètre radial par rapport à une parallèle à la direction d'axe de l'axe de rotation.

14. Embrayage à friction selon la revendication 12, **caractérisé en ce que** les éléments émettant ou générant des signaux sont disposés à la manière d'un pas de vis sur leur diamètre radial.

15. Embrayage à friction selon la revendication 13 ou 14, **caractérisé en ce que** l'inclinaison ou l'élévation des éléments émettant ou générant des signaux est réalisée à l'identique.

16. Embrayage à friction selon la revendication 12, **caractérisé en ce que** les éléments émettant ou générant des signaux sont réalisés de telle sorte que leur espacement angulaire rotatif dans la direction axiale reste constant.

17. Embrayage à friction selon la revendication 12 ou 16, **caractérisé en ce que** les au moins deux éléments émettant ou générant des signaux délivrent une séquence de signaux avec des espacements angulaires constants indépendamment du positionnement axial de l'élément de palpeur et des éléments émettant ou générant des signaux les uns par rapport aux autres.

18. Embrayage à friction selon une des revendications précédentes, **caractérisé en ce que** les éléments émettant ou générant des signaux sont montés sur la plaque de pressage et sur le logement selon un même angle par rapport à une parallèle à l'axe de rotation.

19. Embrayage à friction selon la revendication 1, **caractérisé en ce que** l'élément de palpeur palpe les éléments émettant ou générant des signaux dans la direction radiale.

20. Embrayage à friction selon la revendication 1 ou 2, **caractérisé en ce que** le ou les éléments émettant ou générant des signaux est ou sont disposé(s) sur la plaque de pressage en oblique sur leur diamètre radial par rapport à la direction d'axe de l'axe de rotation.

21. Embrayage à friction selon une des revendications 1 à 3, **caractérisé en ce que** le ou les éléments émettant ou générant des signaux présentent sur la plaque de pressage une plus grande extension axiale que le ou les éléments émettant ou générant des signaux sur le logement.

22. Embrayage à friction selon au moins une des revendications précédentes, **caractérisé en ce que** les éléments émettant ou générant des signaux sont disposés sur la plaque de pressage et le logement dans la direction axiale selon le même angle.

23. Embrayage à friction selon au moins une des revendications précédentes, **caractérisé en ce que** le ou les éléments émettant ou générant des signaux est/sont disposé(s) sur le logement dans la direction axiale selon un angle alpha par rapport à une parallèle à l'axe de rotation et le ou les éléments émettant ou générant des signaux est/sont disposé(s) sur la plaque de pressage dans la direction axiale selon un angle bêta par rapport à une parallèle à l'axe de rotation, dans lequel les deux angles sont différents.

24. Embrayage à friction selon la revendication 23, **caractérisé en ce qu'** un des angles est incliné dans la direction de rotation et l'autre des deux angles alpha et bêta est incliné en sens contraire à la direction de rotation.

25. Embrayage à friction selon au moins une des revendications précédentes, **caractérisé en ce que** l'angle auquel les éléments émettant ou générant des signaux sont inclinés par rapport à cette parallèle à l'axe de rotation adopte un angle inférieur à 60°, de préférence inférieur à 45°.

26. Embrayage à friction selon au moins une des revendications précédentes, **caractérisé en ce qu'** au moins 3 éléments émettant ou générant des signaux sont montés sur la plaque de pressage et le logement.

27. Embrayage à friction selon au moins une des revendications précédentes, **caractérisé en ce que** sont disposés sur la plaque de pressage au moins un élément émettant ou générant des signaux placé en oblique par rapport à une parallèle à l'axe de rotation et sur le logement au moins deux éléments émettant ou générant des signaux.
